Europäisches Patentamt

European Patent Office

Office européen des brevets

(11) Numéro de publication: **0 143 034**
**B1**

## FASCICULE DE BREVET EUROPEEN

(45) Date de publication du fascicule du brevet:
08.02.89

(51) Int. Cl.⁴: **C 09 K 11/77**, G 06 K 19/08

(21) Numéro de dépôt: 84402134.5

(22) Date de dépôt: 24.10.84

(54) **Nouvelles substances luminescentes "anti-stokes", leur procédé de fabrication et leur application dans tout système exploitant la luminescence dans la région spectrale concernée.**

(30) Priorité: 02.11.83 FR 8317388

(43) Date de publication de la demande:
29.05.85 Bulletin 85/22

(45) Mention de la délivrance du brevet:
08.02.89 Bulletin 89/6

(84) Etats contractants désignés:
DE FR GB NL SE

(56) Documents cités:
DE-A- 2 204 062
FR-A- 2 049 067
FR-A- 2 289 976

Le dossier contient des informations techniques présentées postérieurement au dépôt de la demande et ne figurant pas dans le présent fascicule.

(73) Titulaire: RHONE-POULENC CHIMIE, 25, quai Paul Doumer, F-92408 Courbevoie Cédex (FR)

(72) Inventeur: Maestro, Patrick, 27, rue Honoré de Balzac, F-95470 Fosses (FR)
Inventeur: Dougier, Patrick, 8, Manoir de Denouval, F-78470 Andresy (FR)
Inventeur: Browaeys, Jean-Philippe, 23, rue des 3 Frères, F-75018 Paris (FR)

(74) Mandataire: Dutruc-Rosset, Marie-Claude et al, RHONE-POULENC INTERSERVICES Service Brevets Chimie 25, Quai Paul Doumer, F-92408 Courbevoie Cédex (FR)

## Revendications

La présente invention a pour objet de nouvelles substances luminescentes «anti-stokes», leur procédé de fabrication et leur application dans tout système exploitant la luminescence dans la région spectrale concernée. Elle concerne plus particulièrement, des fluorures et des oxyfluorures mixtes de métaux alcalino-terreux et de terres rares.

On connaît d'après le brevet français 1 532 609 qu'il existe des substances luminescentes qui, excitées par un rayonnement à grande longueur d'onde, par exemple, des rayons infra-rouges, émettent alors un rayonnement à plus courte longueur d'onde, notamment des rayons visibles. Les radiations émises sont alors décalées vers les courtes longueurs d'onde et ces substances sont alors dénommées substances luminescentes anti-stokes par opposition à la plupart des substances luminescentes qui suivent la loi de Stokes c'est-à-dire que les radiations émises sont décalées vers les grandes longueurs d'onde par rapport aux radiations absorbées.

Le phénomène de luminescence anti-stokes correspond donc à l'absorbtion de plusieurs photons d'énergie infra-rouge et émission d'un seul photon d'énergie plus grande.

Dans les substances luminescentes de ce genre, il y a présence d'un ion activateur constituant le centre luminescent et d'un ion sensibilisateur apte à absorber la majeure partie de l'énergie du rayonnement excitateur: lesdits ions étant inclus dans une matrice ou réseau hôte.

D'une manière schématique, on peut décomposer le mécanisme de l'effet anti-stokes en plusieurs étapes:
- absorption du rayonnement infra-rouge par un ion sensibilisateur,
- désexcitation de l'ion sensibilisateur et transfert d'énergie sur un ion activateur,
- désexcitation d'un autre ion sensibilisateur et transfert d'énergie sur l'ion activateur déjà excité,
- désexcitation radiative de l'ion activateur doublement excité se traduisant par une émission d'une radiation (généralement visible) de longueur d'onde environ 2 fois plus faible que celle du rayonnement infra-rouge excitateur.

On sait que dans ces substances luminescentes anti-stokes, l'ytterbium est utilisé en tant qu'ion sensibilisateur car il présente un pic d'absorption à 930 nanomètres, longueur d'onde située dans la partie infra-rouge du spectre électromagnétique. Quant aux activateurs, ce sont généralement l'erbium, l'holmium ou le thulium. La couleur d'émission dépend de la structure d'accueil et des ions activateurs considérés.

On connaît d'après le brevet français 2 077 731 des compositions luminescentes faisant intervenir les ions précités, dans des matrices de type fluorure simple tel que $LaF_3$, $GdF_3$, $YF_3$ dopés à l'ytterbium et à l'erbium ou l'holmium ou le thulium ou bien de type fluorure mixte $BaYF_5$ ou $BaLaF_5$ dopés de manière identique: Des compositions de même type $BaLnF_5$ sont également décrites dans FR-A-2 049 067.

Les matrices de type fluorure permettent d'obtenir un bon rendement de fluorescence. Cependant, afin d'améliorer encore l'intensité de l'émission, la demanderesse était à la recherche d'une nouvelle matrice cristalline.

Or pour qu'une structure convienne en tant que matrice, il est nécessaire qu'elle présente:
- une faible symétrie du site d'accueil des ions activateurs
- de grandes distances activateur-ligands.

La première condition est nécessaire pour que la prohibition de transition du premier ordre liée aux règles de sélection soit levée et que les transitions $4f^n$–$4f^n$ au sein des ions activateurs aient une bonne probabilité de se produire.

La deuxième condition permet d'avoir de faibles interactions entre les ions terres rares et le champ cristallin ce qui diminue la probabilité de relaxation par multiphonons.

La présente invention a pour but de fournir de nouvelles substances luminescentes anti-stokes et plus particulièrement des substances servant de matrice d'accueil à des couples d'ions terres rares dont l'un absorbe le rayonnement infra-rouge et l'autre permet l'émission dans le domaine visible.

L'invention a donc pour objet une nouvelle substance luminescente anti-stokes qui est un composé ternaire dont la composition se situe à l'intérieur du diagramme de phase ternaire A, B, C dans lequel:

A représente un fluorure, un oxyde ou un oxyfluorure mixte de terres rares symbolisé par la formule $LnF_{3-\alpha}O_{\alpha/2}$ dans laquelle:
- $\alpha$ est supérieur ou égal à 0 et inférieur ou égal à 3
- Ln représente:
    - au moins un élément terre rare TR choisi dans le groupe formé par l'yttrium, le lanthane, le cérium, le gadolinium, le lutécium, le thorium
    - et l'ytterbium
    - et un élément L choisi dans le groupe formé par l'erbium, l'holmium et le thulium
    B représente le fluorure de baryum
    C représente le fluorure de calcium
ledit composé étant représenté dans le diagramme par la formule $(A)_a(B)_b(C)_c$ dans laquelle a, b, c sont des nombres positifs quelconques tels que l'on conserve les propriétés de luminescence anti-stokes de ces substances.

Interviennent dans le fluorure, l'oxyde ou l'oxyfluorure mixte de terres rares, une terre rare TR inactive en termes de luminescence dont la caractéristique est de posséder une couche périphérique 4f possédant 0,7 ou 14 électrons; l'ytterbium en tant qu'ion sensibilisateur et un ion activateur tel que l'erbium, l'holmium ou le thulium pour lequel le double transfert d'énergie provenant de l'ytterbium est possible, se traduisant, après désexcitation de l'ion, par des raies d'émission situées dans les régions verte et rouge du spec- tro-électromagnétique pour l'erbium et l'holmium et bleue pour le thulium.

Un groupe particulièrement intéressant de substances luminescentes anti-stokes conformes à la présente invention est constitué par les composés dans lesquels, B est le fluorure de baryum, C le fluorure de calcium et A est un fluorure mixte d'yttrium, d'ytterbium et d'erbium; ce dernier pouvant être remplacé par l'holmium ou le thulium.

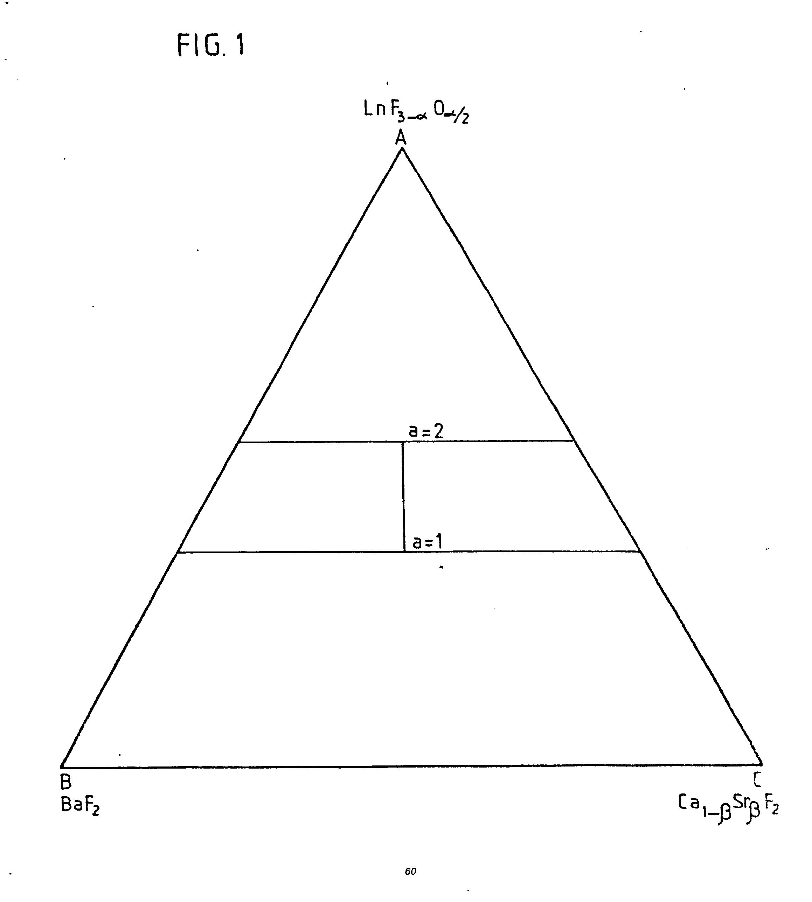

Le diagramme de phase ternaire A, B, C qui est représenté à la figure 1 est un triangle équilatéral dont les sommets sont A, B, C. Tous les composés formés à partir des fluorures A, B, C ont des formules qui peuvent être représentées par un point à l'intérieur du diagramme. Ainsi un composé ou un mélange de composés conforme à l'invention peut être représenté par la formule $(A)_a$ $(B)_b$ $(C)_c$ dans laquelle a, b, c sont des nombres quelconques positifs qui conviennent dans la mesure où l'on conserve les propriétés de conversion d'un rayonnement infra-rouge en radiation visible.

Dans la formule précitée, a est supérieur ou égal à 1 et inférieur ou égal à 2; b et c étant supérieurs à 0 et inférieurs à 2 et leur somme b + c est égale à 2.

Les substances luminescentes préférées de l'invention correspondent à a supérieur ou égal à 1 et inférieur ou égal à 2; b et c étant égaux à 1.

En ce qui concerne la composition de la phase A du diagramme ternaire, A, B, C, on peut dire qu'elle peut être symbolisée par la formule suivante:

$$TR_{(1-x-y)} Yb_x L_y F_{3-\alpha} O_{\alpha/2}$$

dans laquelle x est supérieur à 0 et inférieur à 0,5 et y est supérieur à 0 et inférieur ou égal à 0,1; y doit être inférieur à x; α est supérieur ou égal à 0 et inférieur ou égal à 3.

Les valeurs préférentielles de x sont comprises entre 0,1 et 0,2 et pour y entre 0,02 et 0,04: α étant supérieur ou égal à 0 et inférieur ou égal à 3.

Encore plus préférentiellement, on choisit α égal à 0.

Les substances luminescentes selon la présente invention ont une composition qui vient d'être définie par le diagramme ternaire. Un groupe préféré desdites substances peut être représenté par la formule générale:

$$Ba_{2-m} Ca_m [TR_{1-x-y} Yb_x L_y]_a [F_{1-u} O_{u/2}]_{4+3a} \quad (I)$$

dans laquelle:
- m est supérieur à 0 et inférieur à 2.
- α est supérieur ou égal à 0 et inférieur ou égal à 3.
- a est supérieur ou égal à 1 et inférieur ou égal à 2.
- x est supérieur à 0 et inférieur à 0,5.
- y est supérieur ou égal à 0 et inférieur ou égal à 0,1: y étant inférieur à x
- TR, L ayant la signification donnée précédemment.

Les substances luminescentes de formule I ont une composition qui est délimitée sur le diagramme ternaire représenté par la figure 1, par les deux traits parallèles indiqués sur ledit diagramme.

Les composés de formule I encore plus préférentiels sont ceux qui répondent à la formule I dans laquelle a = 1 et a = 2. Leur composition est définie sur le diagramme ternaire par les 2 points qui résultent de l'intersection de la perpendiculaire avec les deux traits parallèles.

Les substances luminescentes de l'invention ont une structure cristalline qui s'indexe dans deux structures connues dans la littérature. L'analyse radiocristallographique met en évidence que lesdites substances présentent une phase isotype de $\gamma$ K $Yb_3$ $F_{10}$ (fiche J.C.P.D.S. 27 462), ou une phase isotype de K $Y_2$ $F_7$ (fiche J.C.P.D.S. 27 464) ou bien un mélange de ces deux phases.

Dans le cas des composés préférentiels définis par la formule I dans laquelle a varie entre 1 et 2, on remarque que la structure cristalline desdits composés est définie lorsque a est égal à 2 comme une structure de type $\gamma$ K $Yb_3$ $F_{10}$ et quand a devient inférieur à 2, on aboutit à un mélange d'une phase isotype de $\gamma$ K $Yb_3$ $F_{10}$ et d'une phase isotype de K $Y_2$ $F_7$.

On note que l'intensité d'émission des substances de l'invention semble dépendre étroitement de la présence de l'une ou l'autre de ces phases.

Sans que l'invention soit liée à cette interprétation, on pense que la structure type K $Y_2$ $F_7$ s'avère un meilleur réseau hôte pour la luminescence anti-stokes que la structure $\gamma$ K $Yb_3$ $F_{10}$ car l'intensité d'émission augmente avec la proportion de la phase K $Y_2$ $F_7$.

Les substances luminescentes anti-stokes conformes à l'invention se préparent selon des procédés généraux qui ont déjà été décrits dans la littérature. On peut les obtenir par réaction à l'état solide comme à l'état liquide. En effet ces substances sont thermiquement très stables et on peut sans inconvénient dépasser de plus de 300°C leur température de fusion.

Un des modes de préparation des substances luminescentes de l'invention est de partir des fluorures des différents métaux alcalino-terreux et de terres rares qui sont ensuite soumis à un traitement thermique.

Il est préférable que les fluorures mis en jeu présentent une grande pureté, de préférence supérieure à 99% afin de ne pas introduire d'impuretés dans la substance luminescente obtenue.

Avant calcination, on cherchera avantageusement à obtenir un mélange de fluorures aussi intime que possible.

On fait subir au mélange des fluorures concernés un traitement thermique à une température qui varie entre 700°C et 1300°C et de préférence entre 700°C et 1000°C à pression atmosphérique ou sous pression réduite pouvant atteindre $10^{-2}$ mm de mercure.

La durée du traitement thermique est fonction de la capacité de l'appareillage et de son aptitude à monter rapidement en température. Généralement, une fois la température souhaitée atteinte, on la maintient pendant une durée variable d'environ 5 minutes à 15 heures.

Selon les conditions du traitement thermique on obtient une substance luminescente dont la composition est représentée à l'intérieur dans le diagramme ternaire par $(A)_a$ $(B)_b$ $(C)_c$ où A symbolise la phase $Ln$ $F_{3-\alpha}$ $O_{\alpha/2}$ dans laquelle $\alpha$ peut être égal à 0 ou supérieur à 0.

Afin d'obtenir un composé ne contenant que des fluorures donc $\alpha = 0$, on propose d'effectuer ledit traitement thermique sous atmosphère saturée en ions fluorure à l'aide d'un courant gazeux d'acide fluorhydrique.

Une autre variante de réalisation du traitement thermique consiste à l'effectuer sous pression atmosphérique mais en atmosphère de gaz inerte. C'est ainsi que l'on assure un balayage de gaz inertes: gaz rares notamment l'argon. Il est souhaitable de soumettre le gaz rare à un traitement de déshydratation et de désoxygénation réalisé selon les techniques usuelles, par exemple, par passage au travers d'un tamis moléculaire.

On maintient l'atmosphère inerte tout au cours du traitement thermique.

Une variante préférée de l'opération de traitement thermique consiste à chauffer les fluorures sous atmosphère de gaz inertes mais en présence d'un agent de fluoration dénommé flux dont la décomposition thermique provoque la saturation de l'atmosphère en ions fluorure.

Dans ce but, on réalise un mélange intime desdits fluorures avec un flux tel que, par exemple, le dihydrogénofluorure d'ammonium ou le fluorure d'ammonium.

La quantité dudit flux peut représenter de 5 à 50% du poids des fluorures.

Après mélange intime des deux composés cités, on réalise le traitement thermique en chauffant vers une température de 200 °C à 300 °C, de préférence vers 250 °C puis en maintenant ladite température pendant, par exemple, 1 à 2 heures afin de décomposer le flux et de saturer l'atmosphère en ions fluorure puis l'on poursuit le chauffage à la température et pendant la durée précédemment indiquées.

Enfin pour préparer un composé oxyfluoré c'est-à-dire un composé dans lequel $\alpha$ est supérieur à 0 au sein de la phase A, on préconise d'effectuer le traitement thermique à l'air en présence d'un flux tel que précité.

Dans ce cas, il est également souhaitable de maintenir le palier thermique entre 200 °C et 300 °C avant d'atteindre une température supérieure à 700 °C.

A la fin du traitement thermique, on laisse le produit calciné refroidir, sous atmosphère de gaz inerte lorsque l'on ne désire pas obtenir d'oxyfluorures.

Une des méthodes préférées de préparation des substances luminescentes de l'invention consiste à les obtenir par coprécipitation des fluorures à partir des solutions de sels des métaux concernés, par exemple, en milieu aqueux, puis par calcination dudit coprécipité.

Comme matières premières de départ, on peut utiliser les oxydes des métaux concernés ou des composés organiques ou minéraux susceptibles de former des fluorures par action de l'acide fluorhydrique comme les acétates, les nitrates, les chlorures, les carbonates, etc...

La forme sous laquelle se trouvent lesdits composés est indifférente puisqu'ils peuvent être sous forme anhydre ou hydratée.

D'une manière préférentielle, on met en œuvre les métaux de terres rares sous la forme de leur oxyde, la plus courante c'est-à-dire sous la forme sesquioxyde.

Dans le procédé de l'invention $Y_2O_3$, $La_2O_3$, $Gd_2O_3$, $Yb_2O_3$, $Er_2O_3$ ou $Ho_2O_3$ ou $Tm_2O_3$ constituent des matières premières de choix.

En ce qui concerne les métaux alcalino-terreux, on peut également les mettre en œuvre sous la forme de leur oxyde ou de leur hydroxyde, mais il est intéressant d'utiliser directement leurs sels, de préférence, nitrates ou chlorures.

D'une manière générale, il est souhaitable que toutes les matières premières choisies soient d'une très grande pureté de telle sorte qu'elles ne contiennent pas d'impuretés qui puissent se retrouver dans la substance luminescente et ainsi perturber son émission. Il est avantageux de mettre en jeu des matières premières présentant un degré du pureté supérieur à 99%.

La première étape du procédé consiste à mettre en solution aqueuse les différents métaux utilisés. On emploie de l'eau permutée et, de préférence, de l'eau distillée.

Dans le cas des oxydes, leur mise en solution s'effectue par attaque en milieu acide. Ce milieu acide est constitué par des acides concentrés ou dilués, seuls ou en mélange. On met en œuvre au moins un des acides suivants: l'acide nitrique, l'acide chlorhydrique, l'acide sulfurique, l'acide perchlorique, l'acide phosphorique. D'une manière préférentielle, on utilise l'acide nitrique.

Les conditions d'attaque varient selon la nature de l'acide, sa concentration et la température de réaction. On donne, à titre d'exemple, que l'on réalise l'attaque dans de bonnes conditions par l'acide nitrique, en introduisant à température ambiante (généralement 15 à 25 °C) les oxydes des métaux de terres rares à raison de 0,1 à 2 moles/litre de chacun des métaux de terres rares exprimés en oxydes, dans une solution aqueuse contenant 30 à 60% d'acide nitrique.

Dans le cas des sels de terres rares, on prépare une solution aqueuse contenant de 0,1 à 2 moles/litre de chacun des sels de terres rares exprimés en oxydes.

On réalise la préparation des solutions de sels anhydres ou hydratés de calcium et de baryum en dissolvant 0,1 à 0,2 mole desdits sels par litre de solution.

La proportion entre les métaux de terres rares et les métaux alcalino-terreux est calculée en fonction de la composition de la substance luminescente à obtenir.

On effectue ensuite la réaction de coprécipitation des différents métaux sous la forme de leur fluorure, par mélange de la solution des métaux des terres rares avec la solution des métaux alcalino-terreux et addition d'un agent de fluoration.

Pour ce qui est de l'agent de fluoration, on utilise l'acide fluorhydrique ou le fluorure d'ammonium qui sont mis en jeu sous forme d'une solution aqueuse ayant une concentration pondérale de 10 à 60%.

La rapport entre la quantité d'ions fluorure et des différents métaux est au moins égal à ce qu'il sera dans le produit final. La quantité de l'agent de fluoration est au moins égale à la quantité stoechiométrique voire même en léger excès pouvant atteindre 20% de la quantité stoechiométrique.

La réaction de coprécipitation est effectuée à une température qui peut varier dans de larges limites c'est-à-dire entre la température ambiante jusqu'à la température de reflux du mélange réactionnel. On choisit, de préférence, une température comprise entre 60°C et 95°C.

Il est souhaitable que l'enceinte réactionnelle soit chauffée à la température choisie avant introduction des solutions.

Le pH de la réaction de coprécipitation doit se situer entre 2,0 et 4,5 et il peut être nécessaire de l'ajuster dans cet intervalle par addition d'un agent basique, de préférence l'ammoniaque dont la concentration en solution aqueuse se situe le plus souvent entre 10 et 30% en poids.

Une variante préférée de l'invention consiste à réaliser une étape de mûrissement du coprécipité obtenu. A cet effet, on maintient la masse réactionnelle à une température comprise entre 60°C et 95°C pendant une durée variant de 1 à 48 heures.

On laisse ensuite le précipité décanter puis on effectue sa filtration et il est ensuite, de préférence, soumis à un ou plusieurs lavages à l'aide d'eau ou d'une solution aqueuse de fluorure d'ammonium ayant par exemple une concentration variant entre 0,1 et 0,5 g/l.

On répète les opérations de lavage jusqu'à ce que le pH des eaux de lavage soit compris entre 5,5 et 7, et de préférence aux environs de 6.

On soumet alors le coprécipité obtenu à une opération de séchage dont les conditions de réalisation ne sont pas critiques. Il peut être effectué à une température pouvant varier de 90°C à 250°C et sous une pression allant de $10^{-3}$ mm de mercure jusqu'à la pression atmosphérique et, de préférence, choisie entre $10^{-3}$ et 12 mm de mercure. La durée du séchage est fonction de la température et de la pression. Le séchage dure jusqu'à obtention d'un poids constant de coprécipité.

Enfin, la dernière étape du procédé est le traitement thermique du coprécipité séché obtenu. Il est réalisé dans les mêmes conditions que celles définies pour la calcination directe du mélange de fluorures.

La température du traitement thermique varie entre 700°C et 1300°C et, de préférence, entre 700°C et 1000°C et une fois cette température atteinte, elle est maintenue entre 5 minutes et 15 heures.

Si l'on souhaite qu'il n'y ait présence que de fluorures dans le composé final, on effectue le traitement thermique soit sous courant gazeux d'acide fluorhydrique, soit sous atmosphère de gaz inerte et de préférence en présence d'un flux.

Par contre, pour obtenir un composé final oxyfluoré, on soumet le coprécipité à un chauffage à l'air en présence d'un flux.

Une fois le traitement thermique terminé, on laisse refroidir le produit obtenu sous atmosphère inerte lorsque l'on ne souhaite pas la présence d'oxyfluorures.

Quel que soit le procédé d'obtention des composés selon l'invention, on les soumet, généralement, après calcination, à une opération de broyage afin que le diamètre de leurs particules soit inférieur à 10 µm et, de préférence, inférieur à 5 µm.

Le broyage peut être accompagné d'une opération de sélection granulométrique qui peut être réalisée simultanément ou successivement.

Les substances luminescentes de l'invention peuvent donc être préparées par traitement thermique du mélange de fluorures des différents métaux ou, de préférence, du coprécipité des fluorures desdits métaux.

Le premier mode d'obtention ne requérant au niveau de l'appareillage qu'un mélangeur et un four tous deux similaires à ceux utilisés selon l'autre procédé de préparation, on définira ci-après, seulement l'appareillage utilisé pour la mise en œuvre de la voie préférée d'obtention.

L'appareillage utilisé est classique dans le domaine considéré.

On précisera seulement que la réaction de coprécipitation doit être effectuée dans un réacteur constitué d'un matériau résistant à l'action des ions fluorure dans les conditions de la réaction et n'entraînant pas de contamination du coprécipité obtenu. Il peut être choisi en verre, en polydifluorure de vinyle ou en polytétrafluoroéthylène.

Ledit réacteur est équipé d'un dispositif de contrôle de la température (par exemple thermomètre) et est muni d'un dispositif de chauffage qui est, le plus souvent, assuré par un bain thermostaté ou par circulation d'un liquide chaud ou de vapeur d'eau dans la double enveloppe dont est alors pourvu le réacteur.

L'opération de mûrissement peut être conduite dans le réacteur ou bien dans un autre réacteur du même type: le passage de la masse réactionnelle d'un réacteur dans l'autre pouvant se faire par gravité ou à l'aide de pompes.

En ce qui concerne la décantation, on peut la faire dans le réacteur initial, dans un bac à décanter ou l'aide d'une centrifugeuse.

Ensuite, la filtration de la suspension obtenue peut être réalisée sur un filtre sous pression de gaz inerte tel que l'azote, sur filtre sous pression réduite (Büchner, Nutche) ou bien sur un dispositif continu de filtration, par exemple, un filtre rotatif type Vernay ou un filtre à bande. Le filtre sera choisi de telle sorte qu'il présente des diamètres de pores compris entre 0,1 et 10 µm.

Il est de préférence, en toile ou en polytétrafluoroéthylène.

Le coprécipité est placé dans des nacelles en silice, porcelaine ou alumine puis soumis à l'opération de séchage qui peut être réalisée dans un dispositif quelconque de séchage, par exemple, dans une étuve ventilée ou maintenue sous pression réduite.

Le mélange du coprécipité avec le flux est effectué dans un mélangeur ou broyeur en agate, en porcelaine ou en alumine. Un broyeur à billes ou à boulets convient tout à fait bien.

Le mélange obtenu est mis dans une nacelle couverte ou un creuset couvert qui peut être en alumine, platine ou carbone vitreux, puis l'ensemble est introduit dans un four à chambre, tunnel, à moufles ou rotatif équipé d'un dispositif permettant de réguler la température au cours du traitement thermique. Ce four doit être étanche et permettre éventuellement la circulation de gaz inertes. Il y a lieu de prévoir un dispositif destiné à la récupération des vapeurs fluorées, par exemple, une tour de lavage à la soude ou potasse.

Après traitement thermique, le produit peut être soumis à des opérations de broyage réalisées dans le même type de broyeur que celui utilisé lors du mélange, et de sélection granulométrique effectuée, notamment, sur un tamis vibrant. On peut également faire les opérations de broyage et de sélection granulométrique dans un seul appareillage, tel qu'un microniseur.

Les substances luminescentes de l'invention, lorsqu'elles sont convenablement excitées par un rayonnement infra-rouge présentent l'émission de l'ion activateur avec une bonne intensité.

Elles sont particulièrement bien adaptées de par leur rendement de conversion énergétique au revêtement des diodes électroluminescentes émettant dans l'infra-rouge permettant ainsi de convertir le rayonnement infra-rouge et d'obtenir ainsi des diodes émettrices de lumière visible.

Elles peuvent être utilisées pour la détection et la visualisation des rayonnements lumineux émis dans le proche infra-rouge et en particulier les rayonnements laser.

Une application tout à fait adaptée aux substances luminescentes selon l'invention, consiste dans le marquage des documents dans le but soit de classement et de tri, soit de contrôle et prévention de la contrefaçon, la falsification, la perte, le vol ou l'abus de documents, informations enregistrées ou atures. Les substances de l'invention conviennent parfaitement bien pour le marquage de documents tels que billets de banque, chèques, papiers fiduciaires, etc...

Les substances luminescentes peuvent être introduites sur ou dans le document à marquer. On peut par exemple les incorporer dans les encres d'imprimerie, dans ou sur le papier, dans ou sur les matières plastiques susceptibles de revêtir le document à identifier.

L'avantage que présentent également ces substances est lié à leur propriété d'être luminescentes sous l'action d'un rayonnement infra-rouge qui est moins absorbé par le papier que le rayonnement ultraviolet. Les substances luminescentes conformes à l'invention sont donc particulièrement bien adaptées à leur incorporation dans du papier à moins que l'on préfère utiliser le procédé dit de couchage en incorporant la substance anti-stokes dans un liant transparent au rayonnement infra-rouge que l'on dépose par enduction sur une partie ou sur toute la surface des feuilles de papier que l'on désire pouvoir authentifier de manière discrète par l'action d'un rayonnement infra-rouge.

Les substances luminescentes de l'invention sont également bien adaptées à leur incorporation dans une matière plastique susceptible d'être moulée ou mise en forme par tout procédé connu.

On peut également réaliser l'enduction de la matière plastique à l'aide desdites substances mises en œuvre dans un liant transparent au rayonnement infra-rouge.

La rpésente invention va être maintenant illustrée, à titre non limitatif, en donnant des exemples de préparation des substances luminescentes ainsi que leurs spectres.

A titre comparatif, on prépare deux substances connues $(B_1)$ et $(B_2)$ selon le même procédé de préparation des substances luminescentes de l'invention.

Par ailleurs, les données des dessins annexés ci-après sont les suivantes:

- la figure 1 représente le diagramme de phase ternaire A, B, C expliqué ci-dessus.

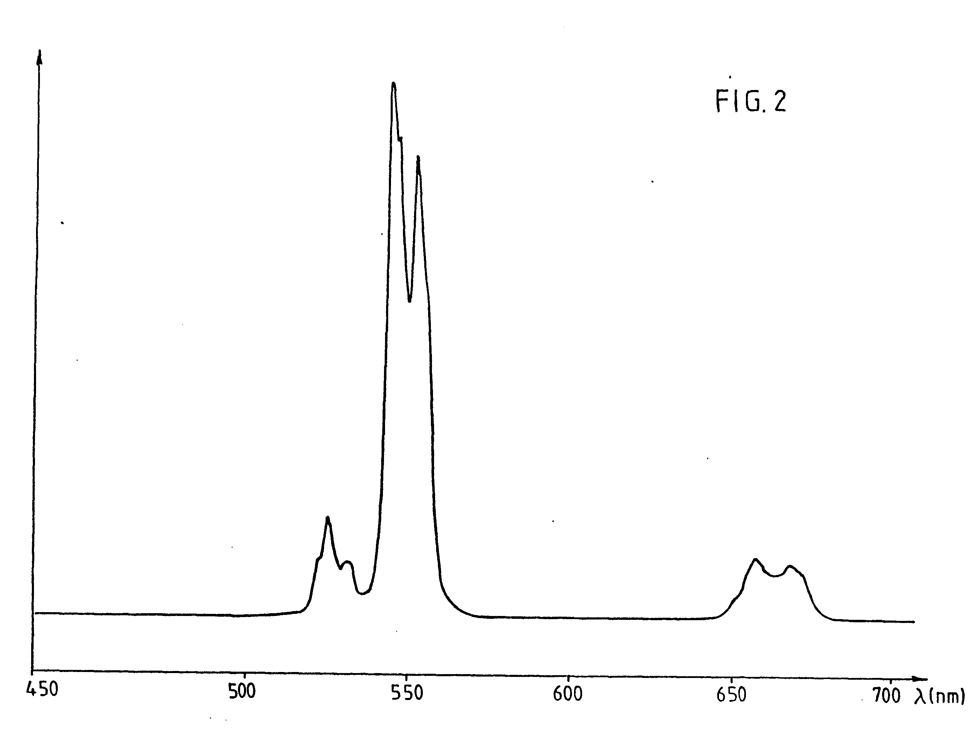

- la figure 2 montre le spectre d'émission des substances luminescentes selon l'invention contenant l'erbium comme ion activateur. L'erbium est susceptible de présenter deux types d'émission: une émission verte vers 544 nm correspondant à la transition $^4S_{3/2} \rightarrow {}^4I_{15/2}$ et une émission rouge plus faible vers 658 nm correspondant à la transition $^4F_{9/2} \rightarrow {}^4I_{15/2}$.

  Ce spectre d'émission est valable pour les substances décrites dans les exemples 1 à 16.

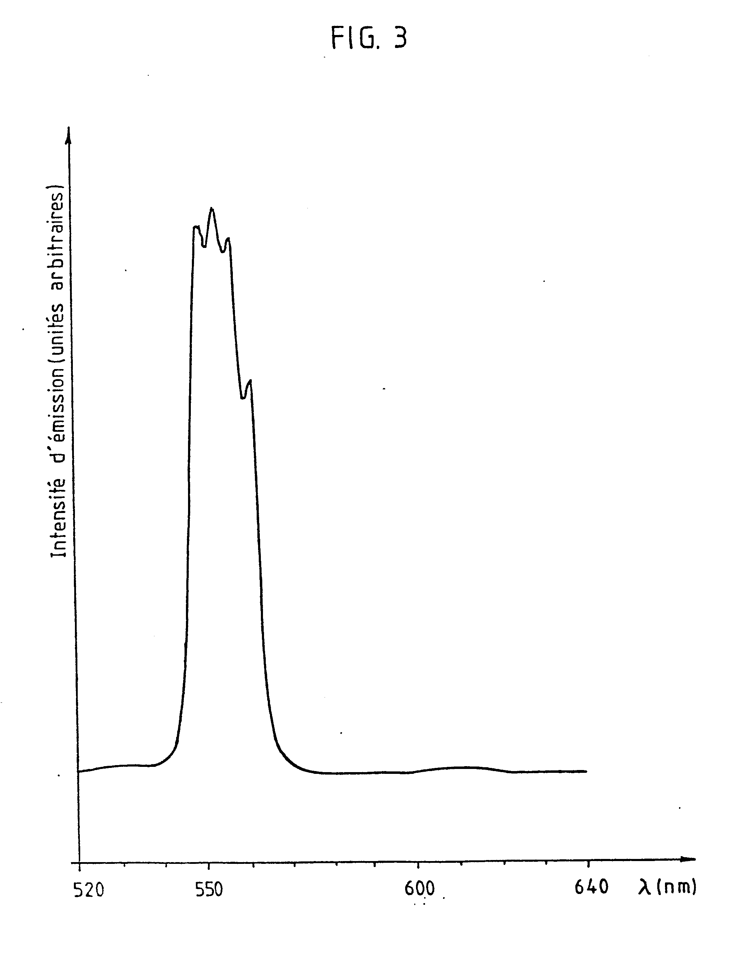

- la figure 3 montre le spectre d'émission des substances luminescentes selon l'invention contenant l'holmium comme ion activateur. On note une émission dans le vert vers 553 nm correspondant à une transition $^5S_2 \rightarrow {}^5I_6$ et une émission plus faible dans le rouge vers 615 nm correspondant à la transition $^5F_5 \rightarrow {}^5I_6$.

  Ce spectre d'émission est valable pour les exemples 17 et 18.

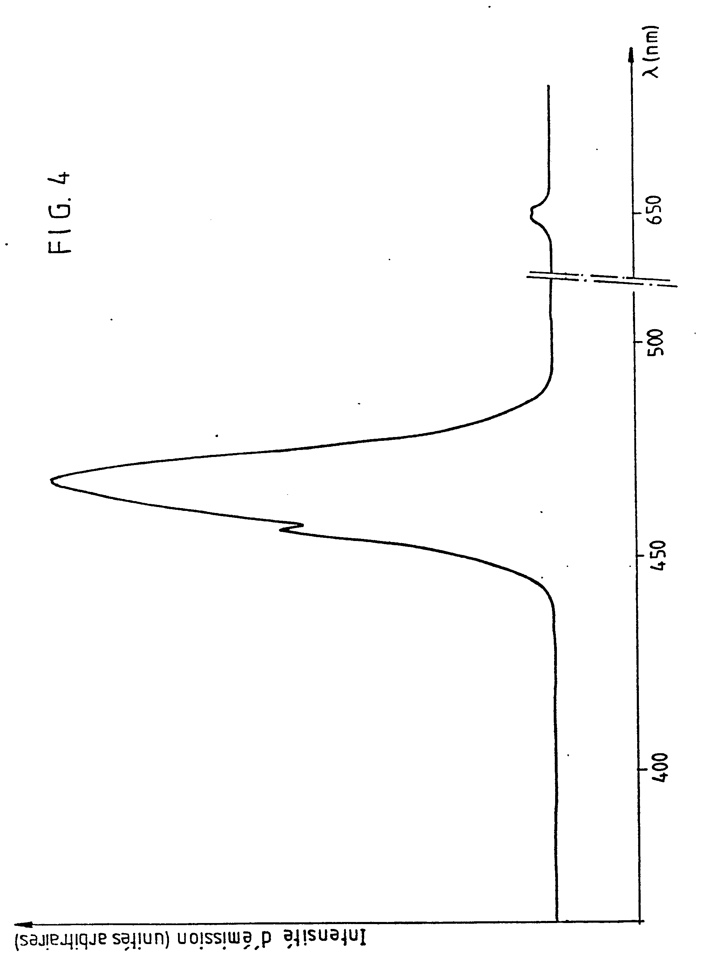

- la figure 4 illustre le spectre d'émission des substances luminescentes contenant du thulium comme ion activateur. Le spectre de ces composés comporte dans le visible, une raie intense dans le bleu vers 465 nm correspondant à une transition $^1G_4 \rightarrow {}^3H_6$ et une raie plus faible dans le rouge vers 650 nm correspondant à une transition $^5F_4 \rightarrow {}^3H_6$.

  Ce spectre d'émission est valable pour la substance de l'exemple 19.

On précisera que dans les figures 2 à 4, l'axe des abscisses représente des longueurs d'onde exprimées en nanomètres et l'axe des ordonnées représente l'intensité d'émission de la substance luminescente exprimée en unités arbitraires.

Exemple 1
Essais $B_1$ et $B_2$
Exemple 1
Préparation d'un composé selon l'invention de formule:

$$Ba\ Ca\ Y_{0,8}\ Yb_{0,3}\ Er_{0,06}\ F_{7,48} \qquad (A_1)$$

Il est préparé à partir des matières premières suivantes:
- 4,5839 g d'oxyde d'yttrium $Y_2O_3$ ayant une pureté de 99,9999%
- 2,9621 g d'oxyde d'ytterbium $Yb_2O_3$ ayant une pureté de 99,9%
- 0,5747 g d'oxyde d'erbium $Er_2O_3$ ayant une pureté de 99,99%
- 13,0675 g de nitrate de baryum $Ba(NO_3)_2$
- 11,8075 g de nitrate de calcium $Ca(NO_3)_2$, 4 $H_2O$

On prépare la solution nitrique des métaux de terres rares par dissolution des différents oxydes de terres rares dans 25 cm³ d'acide nitrique concentré (60%) et environ 20 cm³ d'eau distillée.

On prépare par ailleurs une solution des nitrates des métaux alcalino-terreux en les dissolvant dans environ 130 cm³ d'eau distillée.

Dans un réacteur de précipitation en verre, équipé d'un système d'agitation et d'un thermomètre, et préalablement chauffé à 85 °C par l'intermédiaire d'un bain thermostaté, on introduit successivement les deux solutions précitées. On ajoute progressivement, sous agitation constante, 30 cm³ d'une solution aqueuse à 40% d'acide fluorhydrique (99,9% de pureté). Après 15 minutes d'agitation, on ajoute 50 cm³ d'une solution aqueuse à 20% d'ammoniaque de façon à amener le pH à 2,5.

On maintient la masse réactionnelle à la température de 85 °C pendant 10 heures sous agitation afin de réaliser le mûrissement du coprécipité.

On laisse décanter environ une heure, puis on filtre le coprécipité sur un filtre sous pression d'azote (2 atmosphères). On réalise le lavage du coprécipité à l'aide de 6 fois 100 cm³ d'une solution aqueuse de fluorure d'ammonium $NH_4F$ à 0,25 g/l, de façon à ce que le pH des eaux de lavage soit de 6.

On soumet le coprécipité obtenu à une opération de séchage à 100 °C dans une étuve sous pression réduite ($\simeq 10^{-2}$ mm de mercure) pendant 10 heures. On obtient 23 g de coprécipité séché.

On mélange de manière homogène dans un mortier d'agate automatique les 23 g de coprécipité avec 6,6 g de dihydrogénofluorure d'ammonium $NH_4F$, HF. On introduit ensuite ce mélange dans un creuset d'alumine couvert placé dans un four tubulaire dans lequel on établit un balayage d'argon séché et désoxygéné. On monte la température jusqu'à 250 °C et on la maintient pendant 2 heures. Ensuite on augmente la température jusqu'à 810 °C à raison de 200 °C/heure. On maintient cette température pendant 10 heures. On laisse refroidir le produit calciné sous atmosphère d'argon.

On obtient 22,5 g d'un produit:

$$Ba\ Ca\ Y_{0,8}\ Yb_{0,3}\ Er_{0,06}\ F_{7,48} \qquad (A_1)$$

On caractérisé la structure cristalline du produit ($A_1$) selon la méthode de Debye-Scherer en transmission utilisant le rayonnement monochromatique du molybdène ou du cuivre.

Le produit ($A_1$) a une structure de type $K\ Y_2\ F_7$ et une structure de type $\gamma\ K\ Yb_3\ F_{10}$ étant discernable sous forme de traces.

Afin d'apprécier les propriétés de luminescence des composés de l'invention, notamment du composé ($A_1$), on réalise la préparation de deux substances luminescentes connues:

$$Y_{0,7353}\ Yb_{0,2206}\ Er_{0,0441}\ F_3 \ (essai\ B_1)$$
et
$$Na\ Y_{0,7353}\ Yb_{0,2206}\ Er_{0,0441}\ F_4 \ (essai\ B_2)$$

Essai $B_1$
On prépare le composé de formule:

$$Y_{0,7353}\ Yb_{0,2206}\ Er_{0,0441}\ F_3 \qquad (B_1)$$

selon le même procédé de préparation que celui utilisé pour synthétiser le composé ($A_1$) de l'exemple 1.

On met en œuvre les quantités d'oxydes de terres rares suivantes:
- 16,6038 g d'oxyde d'yttrium $Y_2O_3$
- 8,6938 g d'oxyde d'ytterbium $Yb_2O_3$
- 1,6869 g d'oxyde d'erbium $Er_2O_3$

On obtient 30,4 g de composé ($B_1$).

Essai $B_2$
On effectue la préparation d'un composé qui sera pris comme produit témoin de formule:

$$Na\ Y_{0,7353}\ Yb_{0,2206}\ Er_{0,0441}\ F_4 \qquad (B_2)$$

à partir de 4 g de composé ($B_1$) que l'on mélange à 2,57 g de fluorure de sodium NaF dans un mortier en agate automatique.

On réalise la calcination du mélange obtenu à 635 °C pendant 10 heures.
On obtient 5 g de produit ($B_2$).

Le composé de formule ($B_2$) est pris comme référence afin d'apprécier les propriétés optiques des substances luminescentes de l'invention.

Comparaison des propriétés optiques entre ($A_1$), ($B_1$), ($B_2$)
Les spectres d'émission des différentes substances comparées sont enregistrés par excitation infra-rouge de ladite substance à l'aide d'une lampe à filament de tungstène (lampe PHILIPS réf. 13481) dont on a éliminé le spectre visible à l'aide de filtres appropriés (filtres MTO SPECIVEX DJ 8456 + J 820 a) et détection du rayonnement émis au moyen d'un photomultiplicateur (HAMAMATSU R 136) sensible dans le visible; le rayonnement étant analysé à l'aide d'un monochromateur BAUSCH' & LOMB CAT 33-8645.

Il correspondent à ceux donnés à la figure 2.

La substance luminescente $(A_1)$ émet un rayonnement à 545 nm qui correspond à une émission dans le vert et dont l'intensité (I) est exprimée en pourcentage de l'intensité (Io) d'un rayonnement de même longueur d'onde émis par un produit témoin qui est Na $Y_{0,7353}$ $Yb_{0,2206}$ $Er_{0,0441}$ $F_4$ $(B_2)$

$$\frac{I}{Io} \times 100 = 175$$

On définit également le rapport $\frac{V}{R}$ qui correspond au rapport entre la hauteur de la raie d'émission dans le vert (à 545 nm) et la hauteur de la raie d'émission dans le rouge (à 658 nm)

$$\frac{V}{R} = 10$$

En ce qui concerne la comparaison des composés $(B_1)$ et $(B_2)$, l'examen de leur spectre d'émission permet de tirer les données chiffrées suivantes:

L'intensité (I) du rayonnement de lumière verte $(\lambda = 545 \text{ nm})$ du produit $(B_1)$ exprimée en pourcentage de l'intensité (Io) du rayonnement émis à la même longueur d'onde du produit témoin Na $Y_{0,7353}$ $Yb_{0,2206}$ $Er_{0,0441}$ $F_4$ $(B_2)$ est de 150.

Le rapport entre l'intensité de l'émission dans le vert et de l'intensité d'émission dans le rouge est de 7.

Exemples 2 à 5

On réalise une série de préparation de composés contenant les mêmes éléments métalliques que le composé $(A_1)$ mais dans des proportions variables.

Dans le tableau I qui suit, on indique les quantités de matières premières mises en œuvre et des substances luminescentes obtenues ainsi que leurs propriétés optiques.

Exemples 6 à 9

On réalise la préparation du composé $(A_3)$ selon le même procédé tel que décrit dans l'exemple 1 mais en faisant varier la température du traitement thermique ainsi que la durée du maintien de ladite température.

On note l'influence du traitement thermique sur les propriétés optiques qui sont mises en évidence dans le tableau II.

TABLEAU II

| Ex | température de calcination t°C | durée du traitement à t°C heures | $\frac{I}{Io} \times 100$ | $\frac{V}{R}$ |
|---|---|---|---|---|
| 6 | 1350 | 2 | 60 | 5 |
| 7 | 1170 | 2 | 100 | 8 |
| 8 | 904 | 2 | 115 | 9 |
| 9 | 904 | 10 | 130 | 9 |

TABLEAU I

| Ex | quantité $Y_2O_3$ g | quantité $Yb_2O_3$ g | quantité $Er_2O_3$ g | quantité $Ba(NO_3)_2$ g | quantité $Ca(NO_3)_2$, $4H_2O$ g | formule composé A | structure cristalline composé A | quantité composé A | $\frac{I}{Io} \times 100$ | $\frac{V}{R}$ |
|---|---|---|---|---|---|---|---|---|---|---|
| 2 | 5,7299 | 2,9621 | 0,5747 | 13,0675 | 11,8075 | Ba Ca Y $Yb_{0,3}$ $Er_{0,06}$ $F_{8,08}$ $(A_2)$ | $KY_2F_7 + KYb_3F_{10}$ | 24 | 160 | 14 |
| 3 | 9,3971 | 2,9621 | 0,5747 | 13,0675 | 11,8075 | Ba Ca $Y_{1,64}$ $Yb_{0,3}$ $Er_{0,06}$ $F_{10}$ $(A_3)$ | $KYb_3F_{10}$ | 29 | 125 | 11 |
| 4 | 4,1493 | 2,1675 | 0,4303 | 13,0675 | 11,8075 | Ba Ca $Y_{0,735}$ $Yb_{0,22}$ $Er_{0,045}$ $Er_{0,045}$ $F_7$ $(A_4)$ | $KY_2F_7 + KYb_3F_{10}$ | 21 | 133 | 13 |
| 5 | 4,8905 | 2,5605 | 0,4972 | 11,3204 | 10,2288 | $Ba_{0,8663}Ca_{0,8663}Y_{0,8663}Yb_{0,2599}Er_{0,052}F_7$ $(A_5)$ | * | 22 | 141 | 12 |

* phase prépondérante

On remarque qu'il n'y a aucun intérêt à effectuer le traitement thermique à très haute température.

Exemples 10 à 13

On prépare quatre substances luminescentes contenant les mêmes éléments métalliques que le composé $(A_1)$ de l'exemple 1 à la différence près que la terre rare inactive n'est plus l'yttrium mais le gadolinium dans les exemples 10 et 11, le lanthane dans l'exemple 12 et le lutécium dans l'exemple 13.

Lesdites substances sont préparées comme dans l'exemple 1.

Les puretés des différents oxydes utilisés sont les suivantes:
– oxyde de gadolinium $Gd_2O_3$ = 99,9%
– oxyde de lanthane $La_2O_3$ = 99,9%
– oxyde de lutécium $Lu_2O_3$ = 99,9%

Le tableau III rassemble les quantités de matières premières et de produits finaux ainsi que les résultats obtenus:

Exemple 14

Si l'on reproduit l'exemple 1 mais en effectuant le traitement thermique non pas sous atmosphère inerte mais à l'air, on obtient un composé de même formule que celui de l'exemple 1 à l'exception du fluor qui est partiellement substitué par l'oxygène.

Il s'ensuit une inversion de l'intensité relative des raies d'émission à 545 et 658 nm le rapport $\dfrac{V}{R}$ devenant inférieur à 1.

Exemples 15 et 16

Dans ces deux exemples, on utilise non pas l'erbium comme activateur mais l'holmium.

Pour leur préparation qui est réalisée selon le mode opératoire de l'exemple 1, on met en œuvre de l'oxyde d'holmium de pureté 99,9%.

Les deux substances luminescentes obtenues définies dans le tableau IV présentent un spectre d'émission représenté par la figure 3.

Exemple 17

Préparation d'un composé selon l'invention de formule:

$$Ba\,Ca\,Y\,Yb_{0,35}\,Tm_{0,001}\,F_{8,053} \qquad (A_{12})$$

Elle est faite conformément à l'exemple 1 mais en partant des matières premières suivantes:
– 5,7299 g d'oxyde d'yttrium $Y_2O_3$
– 3,4518 g d'oxyde d'ytterbium $Yb_2O_3$
– 0,0096 g d'oxyde de thulium $Tm_2O_3$ à 99,9% de pureté
– 13,0675 g de nitrate de barium $Ba(NO_3)_2$
– 11,8075 g de nitrate de calcium $Ca(NO_3)_2, 6\,H_2O$

On obtient 24 g de produit $(A_{12})$.

Par excitation infra-rouge à l'aide d'une lampe à filament de tungstène dont le spectre visible est éliminé par des filtres appropriés, on enregistre

TABLEAU III

| Ex | quantité $Gd_2O_3$ g | quantité $Ln_2O_3$ g | quantité $Lu_2O_3$ g | quantité $Yb_2O_3$ g | quantité $Er_2O_3$ g | quantité $Ba(NO_3)_2$ g | quantité $Ca(NO_3)_2, 4H_2O$ g | formule composé A | quantité composé A | $\frac{I}{I_0}\times 100$ | $\frac{V}{R}$ |
|---|---|---|---|---|---|---|---|---|---|---|---|
| 10 | 9,0624 | | | 2,9621 | 0,5747 | 13,0675 | 11,8075 | $Ba\,Ca\,Gd\,Yb_{0,3}\,Er_{0,06}\,F_{8,08}$ $(A_6)$ | 26,5 | 167 | 14 |
| 11 | 15,0111 | | | 2,9621 | 0,5747 | 13,0675 | 11,8075 | $Ba\,Ca\,Gd_{1,64}\,Yb_{0,3}\,Er_{0,06}\,F_{10}$ $(A_7)$ | 34,3 | 90 | 12 |
| 12 | | 13,3585 | | 2,9621 | 0,5747 | 13,0675 | 11,8075 | $Ba\,Ca\,La_{1,64}\,Yb_{0,3}\,Er_{0,06}\,F_{10}$ $(A_8)$ | 32,8 | 67 | 10 |
| 13 | | | 16,3153 | 2,9621 | 0,5747 | 13,0675 | 11,8075 | $Ba\,Ca\,Lu_{1,64}\,Yb_{0,3}\,Er_{0,06}\,F_{10}$ $(A_9)$ | 35,8 | 100 | 9,5 |

TABLEAU V

| Ex | quantité $Y_2O_3$ g | quantité $Yb_2O_3$ g | quantité $Ho_2O_3$ g | quantité $Ba(NO_3)_2$ g | quantité $Ca(NO_3)_2, 4\,H_2O$ g | formule composé A | quantité composé A | $\frac{I}{I_0}\times 100$ | $\frac{V}{R}$ |
|---|---|---|---|---|---|---|---|---|---|
| 17 | 5,7299 | 3,4518 | 0,0367 | 13,0675 | 11,8075 | $Ba\,Ca\,Y\,Yb_{0,35}\,Ho_{0,004}\,F_{8,06}$ $(A_{10})$ | 24,0 | 42 | $\geqslant 10$ |
| 18 | 5,7299 | 3,4518 | 0,1653 | 13,0675 | 11,8075 | $Ba\,Ca\,Y\,Yb_{0,35}\,Ho_{0,0175}\,F_{8,10}$ $(A_{11})$ | 24,2 | 60 | $\geqslant 10$ |

un spectre d'émission illustré par la figure 4 et qui montre un émission dans le bleu à 465 nm.

## Revendications

1. Substance luminescente anti-stokes étant un composé ternaire dont la composition se situe à l'intérieur du diagramme de phase ternaire A, B, C dans lequel:

A représente un fluorure, un oxyde ou un oxyfluorure mixte de terres rares symbolisé par la formule $Ln\ F_{3-\alpha}\ O_{\alpha/2}$ dans laquelle:
- $\alpha$ est supérieur ou égal à 0 et inférieur ou égal à 3
- Ln représente:
  - au moins un élément terre rare TR choisi dans le groupe formé par l'yttrium, le lanthane, le cérium, le gadolinium, le lutécium, le thorium
  - et l'ytterbium
  - et un élément L choisi dans le groupe formé par l'erbium, l'holmium et le thulium
  B représente le fluorure de baryum
  C représente le fluorure de calcium

ledit composé étant représenté dans le diagramme par la formule $(A)_a\ (B)_b\ (C)_c$ dans laquelle a, b, c sont des nombres positifs quelconques tels que l'on conserve les propriétés de luminescence anti-stokes de ces substances.

2. Substance luminescente selon la revendication 1 caractérisée par le fait que dans le diagramme de phase ternaire A, B, C, B est le fluorure de baryum; C est le fluorure de calcium; et A est un fluorure mixte d'yttrium, d'ytterbium et d'erbium ou d'holmium ou de thulium.

3. Substance luminescente selon l'une des revendications 1 et 2 caractérisée par le fait que dans la formule $(A)_a\ (B)_b\ (C)_c$, a est supérieur ou égal à 1 et inférieur ou égal à 2: b et c étant supérieurs à 0 et inférieurs à 2 et leur somme b + c est égale à 2.

4. Substance luminescente selon l'une des revendications 1 à 3 caractérisée par le fait que dans la formule $(A)_a\ (B)_b\ (C)_c$, a est supérieur ou égal à 1 et inférieur ou égal à 2: b et c étant égaux à 1.

5. Substance luminescente selon l'une des revendications 1 à 4 caractérisée par le fait que dans le diagramme de phase ternaire A, B, C, A est symbolisé par la formule suivante:

$$TR_{(1-x-y)}\ Yb_x\ L_y\ F_{3-\alpha}\ O_{\alpha/2}$$

dans laquelle x est supérieur à 0 et inférieur à 0,5; y est supérieur à 0 et inférieur ou égal à 0,1; y doit être inférieur à x; $\alpha$ est supérieur ou égal à 0 et inférieur ou égal à 3.

6. Substance luminescente selon la revendication 5 caractérisée par le fait que x est compris entre 0,1 et 0,2; y est compris entre 0,02 et 0,04; $\alpha$ est supérieur ou égal à 0 et inférieur ou égal à 3.

7. Substance luminescente selon la revendication 6 caractérisée par le fait que $\alpha$ est égal à 0.

8. Substance luminescente selon l'une des revendications 1 à 7 caractérisée par le fait qu'elle répond à la formule (I):

$$Ba_{2-m}\ Ca_m\ [TR_{1-x-y}\ Yb_x\ L_y]_a\ [F_{1-\alpha}\ O_{\alpha/2}]_{4+3a} \qquad (I)$$

dans laquelle:
- m est supérieur à 0 et inférieur à 2.
- $\alpha$ est supérieur ou égal à 0 et inférieur ou égal à 3.
- a est supérieur ou égal à 1 et inférieur ou égal à 2.
- x est supérieur à 0 et inférieur à 0,5.
- y est supérieur ou égal à 0 et inférieur ou égal à 0,1: y étant inférieur à x.
- TR, L ayant la signification donnée précédemment.

9. Substance luminescente selon la revendication 8 caractérisée par le fait que x est compris entre 0,1 et 0,2 et y est compris entre 0,02 et 0,04.

10. Substance luminescente selon l'une des revendications 1 à 9 caractérisée par le fait qu'elle présente une phase isotype de $\gamma\ KYb_3F_{10}$ ou une phase isotype de $KY_2F_7$ ou un mélange des deux phases.

11. Procédé de préparation d'une substance luminescente selon l'une des revendications 1 à 10 caractérisé par le fait qu'il consiste à soumettre le mélange des fluorures de métaux alcalinoterreux et de terres rares ou le coprécipité des fluorures des métaux alcalino-terreux et de terres rares, à un traitement thermique à une température variant entre 700°C et 1300°C.

12. Procédé selon la revendication 11 caractérisé par le fait que la température du traitement thermique varie entre 700°C et 1000°C.

13. Procédé selon l'une des revendications 11 et 12 caractérisé par le fait que la durée du traitement thermique varie de 5 minutes à 15 heures.

14. Procédé selon l'une des revendications 11 à 13 caractérisé par le fait que l'on effectue le traitement thermique sous courant gazeux d'acide fluorhydrique.

15. Procédé selon l'une des revendications 11 à 13, caractérisé par le fait que l'on effectue le traitement thermique sous atmosphère de gaz inerte.

16. Procédé selon la revendication 15 caractérisé par le fait que l'on effectue le traitement thermique sous atmosphère de gaz inerte en présence d'un flux.

17. Procédé selon l'une des revendications 11 à 13 caractérisé par le fait que l'on effectue le traitement thermique à l'air en présence d'un flux.

18. Procédé selon l'une des revendications 16 et 17 caractérisé par le fait que le flux est le dihydrogénofluorure d'ammonium ou le fluorure d'ammonium.

19. Procédé selon l'une des revendications 16 à 18 caractérisé par le fait que le flux est décomposé par traitement thermique entre 200°C et 300°C pendant 1 à 2 heures.

20. Procédé selon l'une des revendications 11 à 19 caractérisé par le fait que l'on soumet le produit obtenu après refroidissement éventuellement sous atmosphère de gaz inertes à une opération de broyage et éventuellement à une sélection granulométrique.

21. Procédé selon la revendication 11 caractérisé par le fait que l'on prépare le coprécipité de métaux alcalino-terreux et de terres rares de la manière qui suit:
- mise en solution aqueuse des différents métaux utilisés,
- coprécipitation des différents métaux sous la forme de leur fluorure par addition d'un agent de fluoration à la solution aqueuse de ces métaux,
- éventuellement mûrissement du précipité obtenu,
- filtration du précipité obtenu,
- lavage du précipité obtenu,
- séchage du précipité obtenu.

22. Procédé selon la revendication 21 caractérisé par le fait que l'on met en solution les oxydes de terres rares à l'aide d'un traitement acide.

23. Procédé selon la revendication 22 caractérisé par le fait que l'on introduit les oxydes de terres rares à raison de 0,1 à 2,0 moles/litre de chacun des métaux de terres rares exprimés en oxydes dans une solution aqueuse contenant 30 à 60% d'acide nitrique.

24. Procédé selon la revendication 21 caractérisé par le fait que l'on met en solution dans l'eau les sels de terres rares tels que acétates, nitrates, chlorures, carbonates à raison de 0,1 à 2,0 moles/litre de chacun des sels de terres rares exprimés en oxydes.

25. Procédé selon la revendication 21 caractérisé par le fait que l'on met en solution dans l'eau les sels de calcium, de baryum tels que acétates, nitrates, chlorures, carbonates à raison de 0,1 à 0,2 mole/litre.

26. Procédé selon l'une des revendications 21 à 25 caractérisé par le fait que l'eau utilisée est de l'eau permutée ou distillée.

27. Procédé selon la revendication 21 caractérisé par le fait que l'agent de fluoration utilisé est l'acide fluorhydrique ou le fluorure d'ammonium.

28. Procédé selon l'une des revendications 21 à 27 caractérisé par le fait que le rapport entre la quantité d'ions fluorure et les différents métaux est au moins égal à ce qu'il sera dans le produit final.

29. Procédé selon la revendication 28 caractérisé par le fait que la quantité de l'agent de fluoration est au moins égale à la quantité stoechiométrique voire même en léger excès pouvant atteindre 20% de la quantité stoechiométrique.

30. Procédé selon l'une des revendications 21, 27, 29 caractérisé par le fait que la réaction de coprécipitation est effectuée une température qui varie entre la température ambiante et la température de reflux du mélange réactionnel.

31. Procédé selon l'une des revendications 21, 27, 30 caractérisé par le fait que le pH de la réaction de coprécipitation se situe entre 2,0 et 4,5.

32. Procédé selon la revendication 21 caractérisé par le fait que l'on opère le mûrissement de la masse réactionnelle à une température comprise entre 60°C et 95°C pendant une durée variant de 1 à 48 heures.

33. Procédé selon la revendication 21 caractérisé par le fait que l'on effectue la filtration du précipité qui est ensuite soumis à un ou plusieurs lavages jusqu'à ce que le pH des eaux de lavage soit compris entre 5,5 et 7.

34. Procédé selon la revendication 33 caractérisé par le fait que le ou les lavages sont réalisés à l'aide d'eau ou d'une solution aqueuse de fluorure d'ammonium à une concentration variant entre 0,1 et 0,5 g/l.

35. Procédé selon la revendication 21 caractérisé par le fait que l'on effectue l'opération de séchage à une température comprise entre 90°C et 250°C et sous une pression allant de $10^{-3}$ mm de mercure jusqu'à la pression atmosphérique.

36. Utilisation des substances luminescentes décrites dans l'une des revendications 1 à 10 comme revêtement des diodes électroluminescentes émettant dans l'infra-rouge; pour la détection et la visualisation des rayonnements lumineux émis dans le proche infra-rouge; et pour le marquage des documents dans un but de classement et de tri, de contrôle et prévention de la contrefaçon, la falsification, la perte, le vol ou l'abus de documents, informations enregistrées ou autres.

## Claims

1. Anti-Stokes phosphor, being a ternary compound whose composition lies within the ternary phase diagram A, B, C in which:

A denotes a rare-earth fluoride, oxide or mixed oxyfluoride symbolized by the formula Ln $F_{3-\alpha}O_{\alpha/2}$ in which:

$\alpha$ is greater than or equal to 0 and smaller than or equal to 3

Ln denotes:
- at least one rare-earth element RE chosen from the group consisting of yttrium, lanthanum, cerium, gadolinium, lutetium and thorium
- and ytterbium
- and an element L chosen from the group consisting of erbium, holmium and thulium

B denotes barium fluoride

C denotes calcium fluoride

the said compound being denoted in the diagram by the formula $(A)_a(B)_b(C)_c$ in which a, b and c are any positive numbers such that the anti-Stokes luminescence properties of these substances are retained.

2. Phosphor according to Claim 1, characterized in that in the ternary phase diagram A, B, C, B is barium fluoride, C is calcium fluoride, and A is a mixed yttrium, ytterbium and erbium or holmium or thulium fluoride.

3. Phosphor according to either of Claims 1 and 2, characterized in that in the formula $(A)_a(B)_b(C)_c$, a is greater than or equal to 1 and smaller than or equal to 2, b and c being greater than 0 and smaller than 2 and their sum b + c is equal to 2.

4. Phosphor according to one of Claims 1 to 3, characterized in that in the formula $(A)_a(B)_b(C)_c$, a is greater than or equal to 1 and smaller than or equal to 2, b and c being equal to 1.

5. Phosphor according to one of Claims 1 to 4, characterized in that in the ternary phase diagram A, B, C, A is symbolized by the following formula:

$$RE_{(1-x-y)}Yb_xL_yF_{3-\alpha}O_{\alpha/2}$$

in which x is greater than 0 and smaller than 0.5, y is greater than 0 and smaller than or equal to 0.1, y must be smaller than x, and $\alpha$ is greater than or equal to 0 and smaller than or equal to 3.

6. Phosphor according to Claim 5, characterized in that x is between 0.1 and 0.2, y is between 0.02 and 0.04, and $\alpha$ is greater than or equal to 0 and smaller than or equal to 3.

7. Phosphor according to Claim 6, characterized in that $\alpha$ is equal to 0.

8. Phosphor according to one of Claims 1 to 7, characterized in that it corresponds to the formula (I):

$$Ba_{2-m}\,Ca_m\,[RE_{1-x-y}\,Yb_x\,L_y]_a\,[F_{1-u}\,O_{u/2}]_{4+3a} \qquad (I)$$

in which:
- m is greater than 0 and smaller than 2.
- $\alpha$ is greater than or equal to 0 and smaller than or equal to 3.
- a is greater than or equal to 1 and smaller than or equal to 2.
- x is greater than 0 and smaller than 0.5.
- y is greater than or equal to 0 and smaller than or equal to 0.1, y being smaller than x.
- RE and L having the meaning given above.

9. Phosphor according to Claim 8, characterized in that x is between 0.1 and 0.2 and y is between 0.02 and 0.04.

10. Phosphor according to one of Claims 1 to 9, characterized in that it has a phase isotypic of $KYb_3F_{10}$ or a phase isotypic of $KY_2F_7$ or a mixture of both phases.

11. Process for the preparation of a phosphor according to one of Claims 1 to 10, characterized in that it consists in subjecting the mixture of alkaline-earth and rare-earth metal fluorides or the coprecipitate of alkaline-earth and rare-earth metal fluorides to a heat treatment at a temperature varying between 700 °C and 1300 °C.

12. Process according to Claim 11, characterized in that the temperature of the heat treatment varies between 700 °C and 1000 °C.

13. Process according to either of Claims 11 and 12, characterized in that the duration of the heat treatment varies from 5 minutes to 15 hours.

14. Process according to one of Claims 11 to 13, characterized in that the heat treatment is carried out under a gaseous stream of hydrofluoric acid.

15. Process according to one of Claims 11 to 13, characterized in that the heat treatment is carried out under an inert gas atmosphere.

16. Process according to Claim 15, characterized in that the heat treatment is carried out under an inert gas atmosphere in the presence of a flux.

17. Process according to one of Claims 11 to 13, characterized in that the heat treatment is carried out in air in the presence of a flux.

18. Process according to either of Claims 16 and 17, characterized in that the flux is ammonium dihydrofluoride or ammonium fluoride.

19. Process according to one of Claims 16 to 18, characterized in that the flux is decomposed by heat treatment between 200 °C and 300 °C for 1 to 2 hours.

20. Process according to one of Claims 11 to 19, characterized in that after cooling, under an inert gas atmosphere if desired, the product obtained is subjected to a milling operation and to a particle size selection if desired.

21. Process according to Claim 11, characterized in that the coprecipitate of alkaline-earth and of rare-earth metals is prepared as follows:
- preparation of an aqueous solution of the various metals employed,
- coprecipitation of the various metals in the form of their fluoride by adding a fluorinating agent to the aqueous solution of these metals,
- if desired, aging of the precipitate obtained,
- filtration of the precipitate obtained,
- washing of the precipitate obtained,
- drying of the precipitate obtained.

22. Process according to Claim 21, characterized in that the rare-earth oxides are dissolved by means of an acid treatment.

23. Process according to Claim 22, characterized in that the rare-earth oxides are introduced in a proportion of 0.1 to 2.0 moles/litre of each of the rare-earth metals expressed as oxides into an aqueous solution containing 30 to 60% of nitric acid.

24. Process according to Claim 22, characterized in that rare-earth salts such as acetates, nitrates, chlorides and carbonates are dissolved in water in a proportion of 0.1 to 2.0 moles/litre of each of the rare-earth salts, expressed as oxides.

25. Process according to Claim 21, characterized in that calcium and barium salts such as acetates, nitrates, chlorides and carbonates are dissolved in water in a proportion of 0.1 to 0.2 mole/litre.

26. Process according to one of Claims 21 to 25, characterized in that the water employed is demineralized or distilled water.

27. Process according to Claim 21, characterized in that the fluorinating agent employed is hydrofluoric acid or ammonium fluoride.

28. Process according to one of Claims 21 to 27, characterized in that the ratio of the quantity of fluoride ions to the various metals is at least equal to what it will be in the final product.

29. Process according to Claim 28, characterized in that the quantity of the fluorinating agent is at least equal to the stoichiometric quantity or even in a slight excess capable of reaching 20% of the stoichiometric quantity.

30. Process according to one of Claims 21, 27 to 29, characterized in that the coprecipitation reaction is carried out at a temperature which varies between the ambient temperature and the reflux temperature of the reaction mixture.

31. Process according to one of Claims 21, 27 to 30, characterized in that the pH of the coprecipitation reaction is between 2.0 and 4.5.

32. Process according to Claim 21, characterized in that the aging of the reaction mixture is performed at a temperature of between 60 °C and 95 °C for a period varying from 1 to 48 hours.

33. Process according to Claim 21, characterized in that the precipitate is filtered off and is then subjected to one or more washings until the pH of the wash waters is between 5.5 and 7.

34. Process according to Claim 33, characterized in that the washing or washings are performed using water or an aqueous solution of ammonium fluoride at a concentration varying between 0.1 and 0.5 g/l.

35. Process according to Claim 21, characterized in that the drying operation is carried out at a temperature of between 90 °C and 250 °C and at a pressure ranging from $10^{-3}$ mm of mercury to atmospheric pressure.

36. Use of the phosphors described in one of Claims 1 to 20 as coating for light-emitting diodes emitting in the infrared, for the detection and visual display of the luminous radiations emitted in the near infrared, and for marking documents for the purpose of classifying and sorting, for checking and for prevention of counterfeiting, forgery, loss, theft or misuse of documents, recorded data or the like.

## Patentansprüche

1. Lumineszierende Anti-Stokes-Substanz, die eine ternäre Verbindung ist, deren Zusammensetzung im Inneren des ternären Phasendiagramms A, B, C liegt, in dem:

A ein Fluorid, ein Oxid oder ein gemischtes Oxidfluorid der Seltenen Erden darstellt, wiedergegeben durch die Formel $Ln\ F_{3-\alpha}O_{\alpha/2}$ in der:

$\alpha$ grösser oder gleich 0 und kleiner oder gleich 3 ist,

Ln darstellt:
- wenigstens ein Seltenerdelement TR ausgewählt aus der Gruppe gebildet aus Yttrium, Lanthan, Cer, Gadolinium, Lutetium und Thorium
- und Ytterbium
- und einem Element L ausgewählt aus der Gruppe gebildet aus Erbium, Holmium und Thulium

B Bariumfluorid darstellt
C Calciumfluorid darstellt,

wobei diese Verbindung in dem Diagramm wiedergegeben ist durch die Formel $(A)_a\ (B)_b\ (C)_c$ in der a, b, c beliebige positive Zahlen sind, derart, dass die Anti-Stokes-Lumineszenzeigenschaften dieser Substanzen bewahrt werden.

2. Lumineszierende Substanz nach Anspruch 1, dadurch gekennzeichnet, dass in dem ternären Phasendiagramm A, B, C B Bariumfluorid ist, C Calciumfluorid ist, und A ein gemischtes Fluorid von Yttrium, Ytterbium und Erbium oder Holmium oder Thulium ist.

3. Lumineszierende Substanz nach einem der Ansprüche 1 und 2, dadurch gekennzeichnet, dass in der Formel $(A)_a\ (B)_b\ (C)_c$ a grösser oder gleich 1 und kleiner oder gleich 2 ist, b und c grösser sind als 0 und kleiner als 2 und ihre Summe b + c gleich 2 ist.

4. Lumineszierende Substanz gemäss einem der Ansprüche 1 bis 3, dadurch gekennzeichnet, dass in der Formel $(A)_a\ (B)_b\ (C)_c$ a grösser oder gleich 1 ist und kleiner oder gleich 2, b und c gleich 1 sind.

5. Lumineszierende Substanz gemäss einem der Ansprüche 1 bis 4, dadurch gekennzeichnet, dass in dem ternären Phasendiagramm A, B, C A durch die nachfolgende Formel wiedergegeben wird:

$$TR_{(1-x-y)}Yb_xL_yF_{3-\alpha}O_{\alpha/2}$$

in der x grösser als 0 und kleiner als 0,5 ist, y grösser als 0 und kleiner oder gleich 0,1 ist, y kleiner ist als x, $\alpha$ grösser oder gleich 0 und kleiner oder gleich 3 ist.

6. Lumineszierende Substanz nach Anspruch 5, dadurch gekennzeichnet, dass x 0,1 bis 0,2 beträgt, y 0,02 bis 0,04 beträgt, $\alpha$ grösser oder gleich 0 und kleiner oder gleich 3 ist.

7. Lumineszierende Substanz nach Anspruch 6, dadurch gekennzeichnet, dass $\alpha$ gleich 0 ist.

8. Lumineszierende Substanz nach einem der Ansprüche 1 bis 7, dadurch gekennzeichnet, dass sie der nachfolgenden Formel (I) entspricht:

$$Ba_{2-m}\ Ca_m\ [TR_{1-x-y}\ Yb_x\ L_y]_a\ [F_{1-u}\ O_{u/2}]_{4+3a}\quad (I)$$

in der:
- m grösser als 0 und kleiner als 2 ist
- $\alpha$ grösser oder gleich 0 ist und kleiner oder gleich 3 ist
- a grösser oder gleich 1 und kleiner oder gleich 2 ist
- x grösser als 0 und kleiner als 0,5 ist
- y grösser oder gleich 0 und kleiner oder gleich 0,1 ist,
  y kleiner ist als x
- TR und L die vorgenannte Bedeutung haben.

9. Lumineszierende Substanz nach Anspruch 8, dadurch gekennzeichnet, dass x 0,1 bis 0,2 beträgt und y 0,02 bis 0,04 beträgt.

10. Lumineszierende Substanz nach einem der Ansprüche 1 bis 9, dadurch gekennzeichnet, dass sie eine isotype Phase von $\gamma\ KYb_3F_{10}$ oder eine isotype Phase von $KY_2F_7$ oder eine Mischung dieser beiden Phasen aufweist.

11. Verfahren zur Herstellung einer lumineszierenden Substanz gemäss einem der Ansprüche 1 bis 10, dadurch gekennzeichnet, dass es darin besteht, das Gemisch der Fluoride der Erdalkalimetalle und der Seltenen Erden oder das Copräzipitat der Fluoride der Erdalkalimetalle und der Seltenen Erden einer thermischen Behandlung bei einer Temperatur, die von 700 bis 1300 °C variiert, zu unterziehen.

12. Verfahren nach Anspruch 11, dadurch gekennzeichnet, dass die Temperatur der thermischen Behandlung zwischen 700 und 1000 °C variiert.

13. Verfahren nach einem der Ansprüche 11 und 12, dadurch gekennzeichnet, dass die Dauer der thermischen Behandlung zwischen 5 Minuten und 15 Stunden variiert.

14. Verfahren nach einem der Ansprüche 11 bis 13, dadurch gekennzeichnet, dass man die thermische Behandlung in einem Gasstrom von Fluorwasserstoffsäure ausführt.

15. Verfahren nach einem der Ansprüche 11 bis 13, dadurch gekennzeichnet, dass man die thermische Behandlung unter einer Inertgasatmosphäre ausführt.

16. Verfahren nach Anspruch 15, dadurch gekennzeichnet, dass man die thermische Behandlung unter einer Inertgasatmosphäre in Gegenwart eines Flussmittels ausführt.

17. Verfahren nach einem der Ansprüche 11 bis 13, dadurch gekennzeichnet, dass man die thermische Behandlung an der Luft in Gegenwart eines Flussmittels ausführt.

18. Verfahren nach einem der Ansprüche 16 und 17, dadurch gekennzeichnet, dass das Flussmittel Ammoniumdihydrogenfluorid oder Ammoniumfluorid ist.

19. Verfahren nach einem der Ansprüche 16 bis 18, dadurch gekennzeichnet, dass das Flussmittel durch thermische Behandlung bei 200 bis 300 °C für die Zeitdauer von 1 bis 2 Stunden zersetzt wird.

20. Verfahren nach einem der Ansprüche 11 bis 19, dadurch gekennzeichnet, dass man das erhaltene Produkt nach Abkühlung gegebenenfalls unter Inertgasatmosphäre einer Mahloperation und gegebenenfalls einer granulometrischen Selektion unterzieht.

21. Verfahren nach Anspruch 11, dadurch gekennzeichnet, dass man das Copräzipitat der Erdalkalimetalle und der Seltenen Erden auf folgende Weise herstellt:
- in wässrige Lösung bringen der verschiedenen verwendeten Metalle
- Copräzipitation der verschiedenen Metalle in Form ihrer Fluoride durch Zugabe eines Fluorierungsagens zu der wässrigen Lösung dieser Metalle
- gegebenenfalls Reifung des erhaltenen Niederschlags
- Filtrierung des erhaltenen Niederschlags
- Waschen des erhaltenen Niederschlags
- Trocknung des erhaltenen Niederschlags.

22. Verfahren nach Anspruch 21, dadurch gekennzeichnet, dass man die Oxide der Seltenen Erden mit Hilfe einer Säurebehandlung in Lösung bringt.

23. Verfahren nach Anspruch 22, dadurch gekennzeichnet, dass man die Oxide der Seltenen Erden im Verhältnis 0,1 bis 2,0 Mol/Liter des jeweiligen Seltenerdmetalls ausgedrückt als Oxide in eine wässrige Lösung enthaltend 30 bis 60 Prozent Salpetersäure einführt.

24. Verfahren nach Anspruch 21, dadurch gekennzeichnet, dass man die Salze der Seltenen Erden wie z.B. Acetate, Nitrate, Chloride, Carbonate im Verhältnis von 0,1 bis 2,0 Mol/Liter der jeweiligen Salze der Seltenen Erden ausgedrückt als Oxide in Wasser in Lösung bringt.

25. Verfahren nach Anspruch 21, dadurch gekennzeichnet, dass man die Salze des Calciums, Bariums wie z.B. die Acetate, Nitrate, Chloride, Carbonate im Verhältnis von 0,1 bis 0,2 Mol/Liter in Wasser in Lösung bringt.

26. Verfahren nach einem der Ansprüche 21 bis 25, dadurch gekennzeichnet, dass das verwendete Wasser ausgetauschtes oder destilliertes Wasser ist.

27. Verfahren nach Anspruch 21, dadurch gekennzeichnet, dass das eingesetzte Fluorierungsagens Fluorwasserstoffsäure oder Ammoniumfluorid ist.

28. Verfahren nach einem der Ansprüche 22 bis 27, dadurch gekennzeichnet, dass das Verhältnis zwischen der Menge der Fluoridionen und den verschiedenen Metallen wenigstens gleich dem entsprechenden Verhältnis im Endprodukt ist.

29. Verfahren nach Anspruch 28, dadurch gekennzeichnet, dass die Menge des Fluorierungsagens wenigstens gleich der stöchiometrischen Menge ist, gegebenenfalls sogar in leichtem Überschuss, der bis zu 20% der stöchiometrischen Menge betragen kann.

30. Verfahren nach einem der Ansprüche 21 und 27 bis 29, dadurch gekennzeichnet, dass die Copräzipitationsreaktion ausgeführt wird bei einer Temperatur, die von der Umgebungstemperatur bis zur Rückflusstemperatur des Reaktionsgemischs variiert.

31. Verfahren nach einem der Ansprüche 21 und 27 bis 30, dadurch gekennzeichnet, dass der pH der Copräzipitationsreaktion zwischen 2,0 und 4,5 liegt.

32. Verfahren nach Anspruch 21, dadurch gekennzeichnet, dass man die Reifung der Reaktionsmasse bei einer Temperatur zwischen 60 °C und 95 °C für eine Zeitdauer von 1 bis 48 Stunden ausführt.

33. Verfahren nach Anspruch 21, dadurch gekennzeichnet, dass man die Abfiltrierung des Niederschlags vornimmt, der anschliessend einem oder mehreren Waschvorgängen unterzogen wird, bis der pH des Waschwassers zwischen 5,5 und 7 liegt.

34. Verfahren nach Anspruch 33, dadurch gekennzeichnet, dass die Waschung(en) mit Hilfe von Wasser oder einer wässrigen Lösung von Ammoniumfluorid mit einer Konzentration von 0,1 bis 0,5 g/l durchgeführt werden.

35. Verfahren nach Anspruch 21, dadurch gekennzeichnet, dass man den Trocknungsschritt bei einer Temperatur zwischen 90 °C und 250 °C und bei einem Druck, der von $10^{-3}$ mm Quecksilber bis zum Atmosphärendruck reicht, durchführt.

36. Verwendung der lumineszierenden Substanzen, die in einem der Ansprüche 1 bis 10 beschrieben sind zur Beschichtung von elektrolumineszierenden Dioden, die im Infrarot emittieren, für die Bestimmung und Sichtbarmachung von im nahen Infrarot ausgesandten Leuchtstrahlen, und für die Markierung von Dokumenten zum Zweck der Klassierung und Sortierung, der Kontrolle sowie zum Verhindern der Nachahmung, der Fälschung, des Verlustes, des Diebstahls oder des Missbrauchs von Dokumenten und aufgezeichneten oder anderen Informationen.

FIG. 1

$LnF_{3-\alpha}O_{\alpha/2}$

A

a = 2

a = 1

B
$BaF_2$

C
$Ca_{1-\beta}Sr_\beta F_2$

FIG. 2

EP 0 143 034 B1

# FIG. 3

FIG. 4

Intensité d'émission (unités arbitraires)

λ (nm)

400  450  500  650